Europäisches Patentamt

European Patent Office

Office européen des brevets

(19)

(11) **EP 0 494 003 B1**

(12) **FASCICULE DE BREVET EUROPEEN**

(45) Date de publication et mention
de la délivrance du brevet:
**15.05.1996 Bulletin 1996/20**

(51) Int Cl.6: **H04L 1/06**

(21) Numéro de dépôt: **91403464.0**

(22) Date de dépôt: **19.12.1991**

(54) **Un système récepteur pour le traitement de signaux reçus sur des voies de diversité**

Empfangsanordnung zur Verarbeitung von auf verschiedenen Wegen empfangenen Signalen

Receiver for processing signals which are received over diversity paths

(84) Etats contractants désignés:
**CH DE ES FR GB IT LI NL SE**

(30) Priorité: **21.12.1990 FR 9016114**

(43) Date de publication de la demande:
**08.07.1992 Bulletin 1992/28**

(73) Titulaires:
• **ALCATEL TELSPACE**
**F-92734 Nanterre Cédex (FR)**
Etats contractants désignés:
**DE ES FR GB IT NL SE**
• **ALCATEL N.V.**
**NL-1077 XX Amsterdam (NL)**
Etats contractants désignés:
**CH LI**

(72) Inventeurs:
• **Sehier, Philippe**
**F-92300 Lavallois Perret (FR)**
• **Gressier, Alain c/o Alcatel Telspace**
**F-92734 Nanterre Cedex (FR)**

(74) Mandataire: **Weinmiller, Jürgen et al**
**Lennéstrasse 9**
**Postfach 24**
**82336 Feldafing (DE)**

(56) Documents cités:
EP-A- 0 178 720          EP-A- 0 279 080
EP-A- 0 396 101          US-A- 3 879 664

## Description

Le domaine de l'invention est celui des systèmes de transmission de signaux, en particulier les systèmes de transmission de signaux numériques modulés selon une modulation telle que la modulation dite (QPSK) (Quadrature Phase Sheft Keying), dans lesquels les signaux sont transmis à travers un canal dispersif à plusieurs trajets.

L'invention concerne plus particulièrement un système récepteur pour le traitement de signaux transmis à travers un canal dispersif à plusieurs trajets et reçus sur une pluralité de voies de diversité.

Il est courant d'utiliser dans les systèmes récepteurs des égaliseurs numériques auto-adaptatifs pour minimiser les effets perturbateurs du canal de transmission. En particulier, le mode de propagation des signaux par trajets multiples engendre des phénomènes d'interférence inter-symboles. C'est le cas par exemple de la transmission par faisceau hertzien à travers un canal à vue directe ou troposphérique. Le signal reçu par le système récepteur est alors la somme pondérée et variable au cours du temps des différentes répliques différemment retardées du signal émis (voir par exemple le document US-A-3 879 664).

Les égaliseurs numériques sont habituellement réalisés sous la forme de filtres numériques transverses à plusieurs coefficients et prises de symboles correspondantes. Les égaliseurs numériques auto-adaptatifs peuvent comporter un filtre de retour de décisions, ce qui permet une amélioration des performances en particulier pour les canaux apportant une distorsion sévère.

Les performances d'un égaliseur numérique auto-adaptatif dépendent de façon critique de la phase du signal d'horloge-symbole régénéré localement dans le récepteur pour numériser d'une part les signaux reçus démodulés, et d'autre part, piloter l'égaliseur numérique au rythme des échantillons complexes numériques obtenus après numérisation.

Parmi les égaliseurs numériques auto-adaptatifs on connait les égaliseurs numériques auto-adaptatifs à suréchantillonnage dans lesquels le signal reçu et démodulé est échantillonné à une fréquence multiple de la fréquence du signal d'horloge-symbole. Les égaliseurs numériques auto-adaptatifs à suréchantillonnage comprennent des filtres numériques susceptibles de régler leur temps de propagation de groupe en fonction de la phase du signal d'horloge-symbole en mettant en oeuvre des algorithmes de calcul des coefficients des filtres numériques transverses qui compensent automatiquement les erreurs de phase du signal d'horloge-symbole, tels que l'algorithme du gradient stochastique.

Toutefois, en pratique on s'aperçoit que cette caractéristique avantageuse des égaliseurs numériques auto-adaptatifs à suréchantillonnage ne suffit pas à compenser des erreurs de phase importantes du signal d'horloge-symbole régénéré du fait que le nombre de coefficients des filtres numériques est nécessairement limité. Par conséquent il est nécessaire de prévoir un dispositif d'asservissement du signal d'horloge-symbole pour contrôler et corriger la phase du signal d'horloge-symbole afin de garantir le bon fonctionnement de l'égaliseur numérique.

Le document IEEE TRANSACTIONS ON COMMUNICATION, vol.COM-14, N° 8, AUGUST 1976, pages 856-863 divulgue un système récepteur comprenant un égaliseur numérique auto-adaptatif à suréchantillonnage et un dispositif de récupération de rythme commandant un moyen générateur d'un signal d'horloge-symbole. Le dispositif de récupération de rythme dérive un signal de commande de phase à partir des coefficients du filtre transverse de l'égaliseur numérique auto-adaptatif pour asservir la phase du signal d'horloge-symbole généré. Le signal de commande est représentatif de la somme pondérée des coefficients du filtre de l'égaliseur. Cette somme pondérée s'exprime par la relation :

$$D = -\sum_{i=1}^{M} \left|c_i\right|^2 + \sum_{i=M+1}^{N} \left|c_i\right|^2$$

où M est choisi un peu plus grand que N/2. Ainsi les mouvements des coefficients du filtre font évoluer la valeur D de part et d'autre de la valeur nulle. La valeur D est filtrée pour former le signal de commande de phase qui asservit la phase du signal d'horloge-symbole.

Toutefois, on a pu constater que les performances du dispositifs de récupération de rythme demeurent médiocres du fait que la plage de réglage, en terme de largeur de bande, de la phase du signal d'horloge-symbole est essentiellement limitée par la bande de boucle de l'égaliseur numérique qui est de quelques hertz.

Par ailleurs, les performances de l'égaliseur sont altérées puisque le signal de commande de phase est généré à partir du mouvement des coefficients du filtre de l'égaliseur, lesquels doivent s'adapter aux variations aléatoires de phase du signal d'horloge-symbole alors que le canal de transmission peut demeurer stable. Ceci conduit donc à choisir des horloges de haute stabilité qui sont coûteuses.

Enfin, ce dispositif de récupération de rythme n'est pas adapté à un égaliseur numérique à plusieurs voies de diversité comprenant plusieurs filtres numériques transverses. En effet la relation définie précédemment ne prend en compte qu'une seule voie de diversité et il n'apparaît pas possible d'étendre cette relation à plusieurs voies de diversité.

L'objet de l'invention est donc de pallier les inconvénients précités et notamment de résoudre le problème de la récupération du rythme-symbole dans un système récepteur comportant un égaliseur numérique auto-adaptatif à plusieurs voies de diversité.

A cet effet l'invention propose un système récepteur pour le traitement de signaux transmis à travers un canal de transmission dispersif à plusieurs trajets et reçus sur une pluralité de voies de diversité conforme à la revendication 1.

D'autres caractéristiques et avantages de l'invention apparaîtront encore mieux à la lecture de la description qui suit d'un exemple de réalisation de l'invention accompagnée des dessins annexés dans lesquels :

- la figure 1 représente de façon schématique un système récepteur comportant un égaliseur numérique auto-adaptatif à diversité et un dispositif de récupération de rythme selon l'invention;
- la figure 2 représente de façon schématique la structure du dispositif de récupération de rythme selon l'invention qui comporte un estimateur de canal;
- la figure 3 représente de façon schématique la structure de l'estimateur de canal qui comporte des corrélateurs;
- la figure 4 représente de façon schématique la structure d'un corrélateur.

Le système récepteur selon l'invention est conçu pour le traitement de signaux numériques modulés, par exemple selon une modulation QPSK, transmis à travers un canal dispersif à plusieurs trajets. Un signal émis par un émetteur est reçu par le récepteur sous la forme d'une pluralité de répliques du signal émis, ces répliques étant reçues sur des voies de diversité du système récepteur.

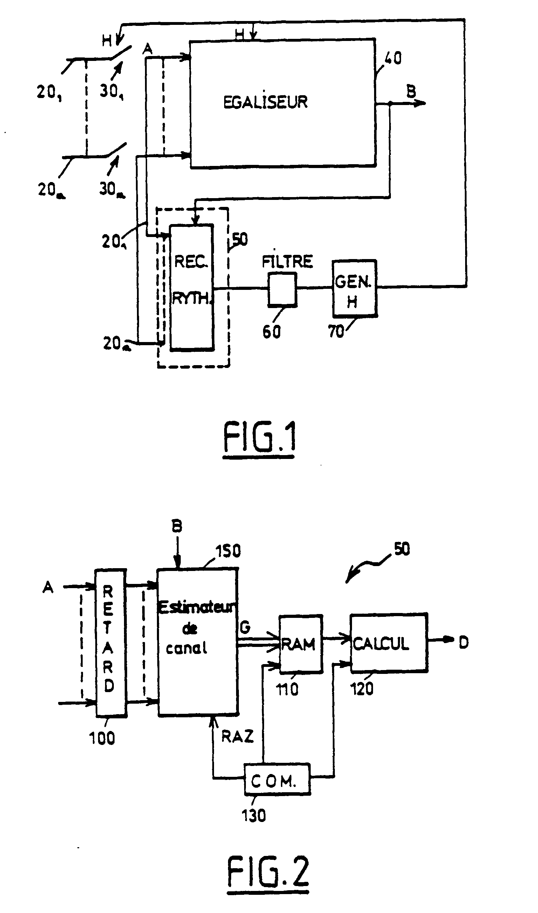

De façon conventionnelle et comme représenté sur la figure 1, le système récepteur comprend des démodulateurs (non représentés) pour démoduler les répliques du signal émis et fournir des signaux reçus démodulés, des convertisseurs tels que $30_1$, $30_n$ recevant en entrée les signaux reçus démodulés via les voies de diversité telles que $20_1$, $20_n$ pour convertir, sous forme numérique, lesdits signaux reçus démodulés et fournir des signaux numériques correspondants (sous forme d'échantillons complexes A) , un égaliseur numérique auto-adaptatif tel que 40 recevant en entrée sur des voies de diversité les signaux numériques pour fournir des symboles d'information complexes B tels que des symboles décidés ou des symboles de référence, un moyen de récupération de rythme tel que 50 et un moyen générateur tel que 70 pour engendrer un signal d'horloge-symbole H à phase commandée, le signal d'horloge-symbole H commandant les moyens de conversion analogique-numérique et l'égaliseur numérique. On conviendra par la suite que A représente un signal échantillonné à k. T/2 où T représente le temps symbole.

Le moyen générateur 70 du signal d'horloge-symbole (base de temps du récepteur) est avantageusement un oscillateur commandé du type tension/fréquence ou analogue ayant une entrée de commande pour asservir la phase du signal d'horloge-symbole engendré.

Le dispositif de récupération de rythme 50 dérive un signal de commande de phase, via un filtre adapté 60 de mise en forme, à partir du traitement des signaux numériques (échantillons A) et des symboles d'information B. Le signal de commande de phase est appliqué sur l'entrée de commande du moyen générateur 70 pour asservir la phase du signal d'horloge-symbole et corriger les erreurs de phase du signal d'horloge-symbole.

Le dispositif de récupération de rythme selon l'invention est représenté plus en détail sur la figure 2. Il comprend un moyen estimateur de canal 150 sensible auxdits échantillons complexes A et auxdits symboles d'information complexes B (décidés ou de référence) pour fournir des échantillons complexes d'estimation G de la réponse impulsionnelle du canal prise pour chaque voie de diversité, un moyen de mémorisation temporaire tel que 110, du type mémoire RAM, pour enregistrer pendant une période prédéterminée lesdits échantillons complexes d'estimation, et un moyen de calcul tel que 120, du type microprocesseur ou analogue, pour réaliser une opération sur lesdits échantillons d'estimation mémorisés.

On devra comprendre que l'estimation de la réponse impulsionnelle du canal doit être effectuée sur un certain nombre de symboles d'information pour être suffisamment représentative de la qualité du canal. Par ailleurs l'estimation de la réponse impulsionnelle du canal est faite à intervalles de temps réguliers sous l'action d'un moyen de commande tel que 130 adapté pour synchroniser le moyen estimateur de canal 150, le moyen de mémorisation 110 et le moyen de calcul 120.

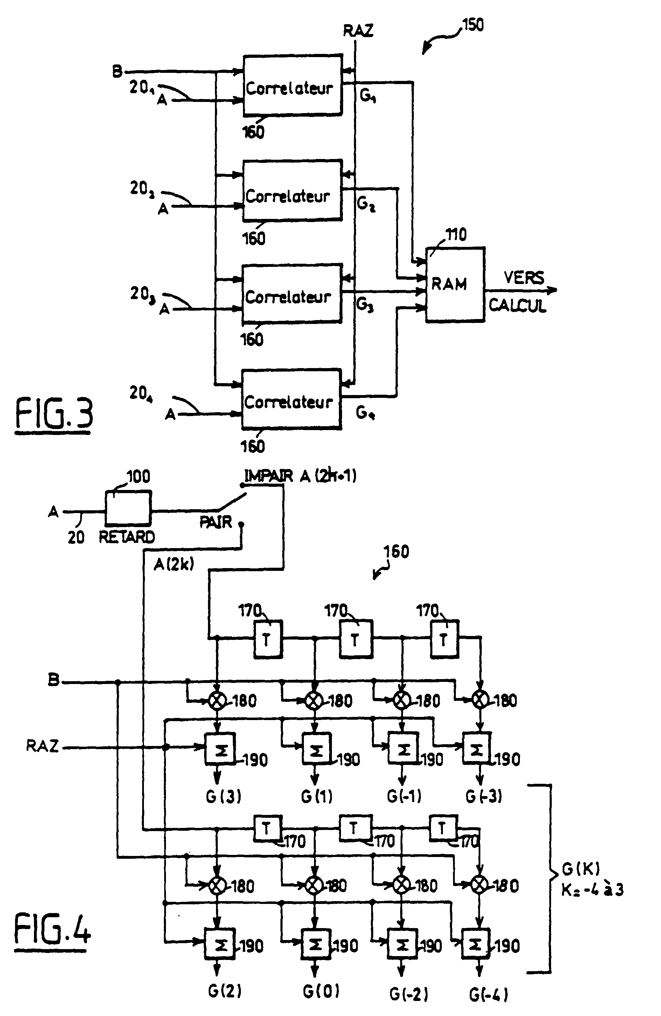

On entend par réponse impulsionnelle du canal, le résultat de la convolution du filtre émission, du canal de transmission, du filtre de réception. Par conséquent le moyen estimateur de canal 150 fournit des échantillons d'estimation pour chaque voie de diversité à des instants multiples d'un demi-temps symbole (kT/2). En se reportant maintenant à la figure 3, on a représenté de façon schématique un exemple de réalisation d'un estimateur de canal pour une modulation QPSK qui comprend une batterie de corrélateurs tels que 160, chaque corrélateur étant affecté à une voie de diversité 20 (dont quatre ont été représentées sur cette figure). Chaque corrélateur 160 reçoit les symboles d'information B pris aux instants multiples du temps symbole (kT) et les échantillons A de la voie de diversité correspondante pris aux instants multiples d'un demi-temps symbole (kT/2) pour fournir les échantillons d'estimation G1, G2, G3, G4. Si on considère que les échantillons d'estimation G sont obtenus pour un nombre important de symboles B, la sortie des corrélateurs 160 peut directement être utilisée en tant qu'estimation du canal sans dégrader les performances de la boucle de récupération de rythme. En effet le rythme nécessaire des estimations pour l'asservissement du signal d'horloge-symbole est très petit par rapport au rythme des symboles d'information.

La figure 4 représente un corrélateur 160 simplifié adapté pour une modulation QPSK. Sur cette figure, le corrélateur 160 est construit de façon standard, autour d'une série de registres 170 pour la prise des échantillons A, d'une série de multiplieurs 180 correspondants et d'une série d'intégrateurs 190 correspondants dont le fonctionnement ne sera pas décrit ci-après puisqu'il est bien connu de l'homme de l'art. On a aussi représenté sur cette figure, un moyen de retard 100 associé à une voie de diversité 20 pour retarder les échantillons A complexes pris aux instants multiples de T/2, d'une valeur de temps ajustée pour que le corrélateur 160 fournisse la plus grande énergie de la réponse impulsionnelle du canal pour la voie considérée. Par conséquent les moyens de retard 100 sont agencés pour positionner les échantillons complexes A dans la fenêtre d'analyse des corrélateurs 160, c'est-à-dire pour amener les échantillons complexes A sensiblement en correspondance temporelle avec les symboles d'information B.

Le corrélateur 160 reçoit en entrée, d'une part les échantillons A retardés et distribués en échantillons de rang pair A(2k) et en échantillon de rand impair A(2k+1), et d'autre part les symboles B décidés ou de référence correspondant aux échantillons retardés pour fournir un ensemble d'échantillons d'estimation de canal pour la voie considérée. Le corrélateur représenté sur la figure 4 comporte huit accumulateurs 190 qui délivrent chacun des composantes d'estimation de canal G(k) pour k allant de -4 à 3, k représentant le rang de la prise d'échantillon A.

Au départ de l'estimation de canal, le moyen de commande 160 met à l'état d'initialisation les accumulateurs 190 des corrélateurs 190 par une commande RAZ. Pendant une séquence suffisamment longue de symboles d'information B, les accumulateurs 190 cumulent le résultat des multiplications des échantillons complexes A(2k+1) ou A(2k) avec les symboles d'information complexes B. Dans le cas représenté sur les figures 3 et 4, l'estimateur de canal 150 délivre 32 échantillons d'estimation G(k), soit huit pour chaque corrélateur. Les échantillons d'estimation G(k) sont enregistrés dans la mémoire 110.

Par la suite on considérera que G1(k) (respectivement G2(k), G3(k), etc...) désigne l'échantillon d'estimation à k. T/2 de l'estimation de réponse impulsionnelle pour la voie 1 (respectivement voie 2, voie 3, etc ...)

Le moyen de calcul 120 est agencé pour extraire la valeur des échantillons d'estimation dans la mémoire 110 et calculer l'expression

$$D = \frac{\displaystyle\sum_{k=-4}^{3} k \cdot \left[ \left| G_1(k) \right|^2 + .. + \left| G_4(k) \right|^2 \right]}{\displaystyle\sum_{k=-4}^{3} \left| G_1(k) \right|^2 + .. + \left| G_4(k) \right|^2}$$

dont les différentes valeurs de part et d'autre de la valeur nulle traduisent une erreur de phase du signal d'horloge-symbole. Bien entendu cette expression est donnée pour quatre voies de diversité mais on pourra facilement la généraliser pour un nombre de voies de diversité supérieur. Par ailleurs les tests ont montré que l'expression D ci-dessus pouvait être simplifiée par suppression du dénominateur tout en restant fiable. On peut ainsi remarquer que la valeur d'erreur de phase est une combinaison linéaire des modules des valeurs complexes d'estimation de canal prises pour une pluralité de symboles d'information.

La valeur d'erreur D calculée par le moyen de calcul 120 est filtrée par un filtre 60 pour fournir le signal de commande asservissant la phase du signal d'horloge-symbole. Le système de récupération de rythme selon l'invention permet l'acquisition et le verrouillage de la base de temps du récepteur même lorsque le signal émis est très perturbé par le canal ou qu'il existe un évanouissement important sur l'une des voies de diversité. Par ailleurs le dispositif de récupération de rythme selon l'invention n'ajoute que très peu de complexité au système récepteur puisqu'il est réalisé à partir d'un dispositif identique à celui qui permet l'asservissement des coefficients des filtres de l'égaliseur numérique auto-adaptatif.

## Revendications

1. Un système récepteur pour le traitement de signaux numériques modulés transmis à travers un canal de transmission dispersif à plusieurs trajets et reçus sur une pluralité de voies de diversité (20), ledit système récepteur comprenant des convertisseurs (30) desdits signaux reçus pour fournir des signaux numériques correspondants (A), un égaliseur numérique auto-adaptatif (40) à voies de diversité sensible auxdits signaux numériques (A) pour fournir des symboles d'information (B) et un circuit générateur (70) d'un signal d'horloge-symbole qui commande les convertisseurs (30) et l'égaliseur (40), caractérisé en ce qu'il comprend en outre un dispositif de récupération de rythme (50), qui dérive un signal de commande de phase, via un filtre adapté (60) de mise en forme, à partir du traitement des signaux numériques (A) et des symboles d'information (B) ; ce signal de commande étant reçu sur une entrée de commande du circuit générateur du signal d'horloge-symbole (70) pour asservir la phase de ce signal d'horloge-symbole, ledit dispositif (50) de récupération de rythme comprenant des moyens (150) d'estimation de la réponse impulsionnelle du canal pour chaque voie de diversité pour fournir des valeurs complexes d'estimation de canal et un moyen (120) de calcul pour calculer une valeur d'erreur de phase-symbole à partir desdites valeurs complexes d'estimation de canal.

2. Un système récepteur selon la revendication 1 dans lequel ledit moyen (50) de récupération de rythme comprend en outre des moyens (100) de retard placés en entrée des moyens d'estimation de canal pour amener lesdits signaux numériques en correspondance temporelle avec lesdits symboles d'information correspondants.

3. Un système récepteur selon la revendication 1 dans lequel ledit moyen (120) de calcul est agencé pour calculer la valeur d'erreur de phase-symbole à partir d'une combinaison linéaire des modules des valeurs complexes d'estimation du canal prises pour une pluralité de symboles d'information.


**Patentansprüche**

1. Empfangssystem für die Verarbeitung von modulierten digitalen Signalen, die über streuende Übertragungswege mit mehreren Übertragungsstrecken übertragen wurden und von einer Mehrzahl von Diversity-Kanälen (20) empfangen werden, wobei das Empfangssystem Analog-Digital-Wandler (30) für die empfangenen Signale zur Lieferung von entsprechenden digitalen Signalen (A), einen digitalen selbstanpassenden Entzerrer (40) mit Diversity-Kanälen, der auf die digitalen Signale (A) anspricht und Datensymbole (B) liefert, und einen Symboltaktsignalgenerator (70) enthält, der ein Symboltaktsignal zur Steuerung der Wandler (30) und des Entzerrers (40) erzeugt, dadurch gekennzeichnet, daß das System weiter eine Vorrichtung (50) zur Taktwiedergewinnung enthält, die über ein angepaßtes Formgebungsfilter (60) aus der Verarbeitung der digitalen Signale (A) und der Datensymbole (B) ein Phasensteuersignal ableitet, das an einen Steuereingang des Symboltaktsignalgenerators (70) zur Regelung der Phase des Symboltaktsignals angelegt wird, wobei die Vorrichtung (50) zur Taktwiedergewinnung Mittel (150) zum Abschätzen der Impulsantwort für jeden Diversity-Kanal, die komplexe Kanalschätzwerte liefern, und ein Mittel (120) zur Berechnung des Phasenfehlerwerts des Symboltakts aufgrund der komplexen Kanalschätzwerte aufweist.

2. Empfangssystem nach Anspruch 1, in dem das Mittel (50) zur Taktwiedergewinnung außerdem Verzögerungsmittel (100) aufweist, die am Eingang der Kanalschätzmittel angeordnet sind und die digitalen Signale mit den entsprechenden Datensymbolen zeitlich zur Deckung bringen.

3. Empfangssystem nach Anspruch 1, in dem das Rechenmittel (120) den Phasenfehlerwert des Symboltakts aus einer linearen Kombination der Absolutwerte der komplexen Kanalschätzgrößen über eine Mehrzahl von Datensymbolen hinweg berechnet.


**Claims**

1. Receiver system for processing modulated digital signals transmitted via a multipath dispersive transmission medium and received on a plurality of diversity channels (20), said receiver system including converters (30) for converting said received signals to supply corresponding digital signals (A), an adaptive diversity channel digital equaliser (40) responsive to said digital signals (A) for supplying information symbols (B) and a generator circuit (70) for producing a symbol-clock signal controlling the converters (30) and the equaliser (40), characterised in that it further comprises a timing recovery device (50) which derives a phase control signal, via a matched shaping filter (60), by processing digital signals (A) and information symbols (B); said control signal being received at a control input of the symbol-clock signal generator (70) for controlling the phase of said symbol-clock signal, said timing recovery device (50) including means (150) for estimating the impulse response of the medium for each of said diversity channels in order to supply complex medium estimate values and means (120) for calculating symbol-phase error values from said medium estimate complex values.

2. Receiver system according to claim 1 wherein said timing recovery means (50) further include time-delay means (100) located at the input of the medium estimator means for bringing said digital signals into correct timing correspondence with said information symbols.

3.   Receiver system according to claim 1 wherein said calculation means (120) are adapted to calculate the symbol-phase error value from a linear combination of the moduli of the medium estimate complex values for a plurality of information symbols.

FIG.1

FIG.2

FIG.3

FIG.4